# EUROPEAN PATENT APPLICATION

(11) **EP 4 553 597 A1**
(43) Date of publication of application: **14.05.2025**
(21) Application number: 23857614.4
(22) Date of filing: 08.08.2023
(51) Int. Cl.: G05B 19/418, H04L 61/3015, H01M 10/04

(54) **DEVICE FOR CELL ID RESTORATION AND METHOD FOR OPERATING SAME**

(30) Priority: 23.08.2022 KR 20220105651; 11.04.2023 KR 20230047483
(71) Applicant: LG Energy Solution, Ltd., Seoul 07335 (KR)
(72) Inventor: KIM, Seol Hee, Daejeon 34122 (KR); PARK, Wi Dae, Daejeon 34122 (KR); KIM, Min Su, Daejeon 34122 (KR); PARK, Jong Seok, Daejeon 34122 (KR); SEO, Dong Min, Daejeon 34122 (KR); JO, Eun Ji, Daejeon 34122 (KR); LEE, Yoon Seob, Daejeon 34122 (KR)
(74) Representative: BCKIP Part mbB
(86) International application number: PCT/KR2023/011694
(87) International publication number: WO 2024/043580

(57) **Abstract**

A cell ID recovery device according to one embodiment disclosed herein includes a communication circuit and a processor, in which the processor is configured to acquire a plurality of IDs corresponding to a plurality of unit cells through the communication circuit, sort the plurality of IDs according to a specified criterion, derive an ID setting rule of the plurality of IDs based on the plurality of IDs sorted according to the specified criterion, detect a non-recognized cell among the plurality of unit cells based on the plurality of IDs, and set an ID of the non-recognized cell based on an ID of at least one unit cell adjacent to the non-recognized cell and the ID setting rule.

## Description

### [TECHNICAL FIELD]

### CROSS-REFERENCE TO RELATED APPLICATION

This application claims priority to and the benefit of Korean Patent Application No. 10-2022-0105651 filed on August 23, 2022 and No. 10-2023-0047483 filed on April 11, 2023 in the Korean Intellectual Property Office, the entire contents of which are incorporated herein by reference.

### TECHNICAL FIELD

Embodiments disclosed herein relate to a cell ID recovery device and a method of operating the same.

### [BACKGROUND ART]

Unlike primary batteries, secondary batteries have recently been extensively researched and developed due to rechargeability and the possibility of having a smaller size and a larger capacity. As the technology development and demand for mobile devices increase, a demand for secondary batteries as an energy source is rapidly increasing.

A secondary battery is manufactured by having an electrode assembly embedded in a cylindrical or prismatic case made of a metal material or a pouch-shaped case of a laminate sheet containing aluminum and sealing the case after injecting an electrolyte solution.

The electrode assembly has a structure in which a cathode and an anode are laminated so that a separator is interposed between the cathode and the anode and is classified into a jelly-roll type electrode assembly having a structure that is wound after the separator is interposed between a long sheet-shaped cathode and anode coated with an active material, a stack type electrode assembly in which a plate-shaped cathode and anode are laminated with a separator interposed therebetween, a stack-and-folding type electrode assembly having a structure in which a unit cell is disposed on a long sheet-shaped separator and then the separator is repeatedly folded from one end in the same direction, and a lamination-and-stack type electrode assembly having a structure in which unit cells are laminated after the separator is interposed between the unit cells.

Here, the unit cell may be formed of a mono cell in which each of a cathode and an anode is positioned at one of both sides of an outermost portion thereof, a bi-cell in which electrodes having the same polarity are positioned at both sides of the outermost portion, or a half cell in which the cathode or the anode is positioned between separators formed at both sides of the outermost portion.

A process of manufacturing the electrode assembly may include a notching process of forming an electrode tab on an electrode sheet of a unit cell, a lamination process of bonding the unit cell and a separator, and/or a process of forming an electrode assembly by inputting a plurality of unit cells in a unit of a specified number and stacking or folding the unit cells.

In order to manage problems occurring during the process of manufacturing the electrode assembly, it is necessary to secure a tracking rate of each of the unit cells. In order to secure such a tracking rate, the process of manufacturing the electrode assembly may include a process of assigning an ID to a unit cell and recognizing the ID assigned to each of the unit cells. For example, the process of manufacturing the electrode assembly may include a process of assigning an ID to a unit cell by marking a barcode on an electrode tab of the unit cell and recognizing the assigned ID by recognizing the barcode marked on the electrode tab through a barcode reader (BCR).

### [DISCLOSURE]

### [TECHNICAL PROBLEM]

When an ID of a unit cell may not be recognized due to a problem occurring in a process of assigning the ID to the unit cell or a process of recognizing the ID assigned to each of the unit cells, it is difficult to secure a tracking rate of each of the unit cells.

One object of embodiments disclosed herein is to provide a cell ID recovery device capable of recovering an ID of a non-recognized cell of which an ID is not recognized and a method of operating the same.

The objects of embodiments disclosed herein are not limited to the above-described objects, and other objects that are not mentioned will be able to be clearly understood by those skilled in the art from the following descriptions.

### [TECHNICAL SOLUTION]

A cell ID recovery device according to one embodiment disclosed herein includes a communication circuit, and a processor, wherein the processor is configured to acquire a plurality of IDs corresponding to a plurality of unit cells through the communication circuit, sort the plurality of IDs according to a specified criterion, derive an ID setting rule of the plurality of IDs based on the plurality of IDs sorted according to the specified criterion, detect a non-recognized cell among the plurality of unit cells based on the plurality of IDs, and set an ID of the non-recognized cell based on an ID of at least one unit cell adjacent to the non-recognized cell and the ID setting rule.

According to one embodiment disclosed herein, the processor may be configured to acquire the plurality of IDs corresponding to the plurality of unit cells from a first discharge unit of a first process, a second discharge unit of a second process, a first input unit of a third process, and/or a third discharge unit of a third process through the communication circuit, in which the first process may be a notching process of forming an electrode tab on an electrode sheet of each of the plurality of unit cells, the second process may be a lamination process of bonding the plurality of unit cells and a separator, the third process may be a process of forming an electrode assembly by inputting the plurality of unit cells in a unit of a specified number, and the third process may include a stacking process, and sort the plurality of IDs based on a time sequence in which the plurality of IDs are acquired.

According to one embodiment disclosed herein, the processor may be configured to acquire the plurality of IDs corresponding to the plurality of unit cells from a second input unit of a fourth process through the communication circuit, in which the fourth process may be a process of forming an electrode assembly by inputting the plurality of unit cells in a unit of a specified number and the fourth process may include a folding process, and sort the plurality of IDs based on an order in which the plurality of unit cells are input into the fourth process and a time sequence in which the plurality of IDs are acquired.

According to one embodiment disclosed herein, the processor may be configured to acquire the plurality of IDs corresponding to the plurality of unit cells from a fourth discharge unit of a fourth process through the communication circuit, in which the fourth process may be a process of forming an electrode assembly by inputting the plurality of unit cells in a unit of a specified number and the fourth process may include a folding process, and sort the plurality of IDs based on an arrangement order in the electrode assembly formed through the fourth process of the plurality of unit cells and a time sequence in which the plurality of IDs are acquired.

According to one embodiment disclosed herein, the processor may be configured to detect the non-recognized cell having an ID including a specified number or alphabetic character among the plurality of unit cells based on the plurality of IDs.

According to one embodiment disclosed herein, the processor may be configured to detect the non-recognized cell having an ID out of the ID setting rule among the plurality of unit cells based on the plurality of IDs sorted according to the specified criterion.

According to one embodiment disclosed herein, the processor may be configured to identify a first ID of a first unit cell and a second ID of a second unit cell adjacent to the non-recognized cell based on the plurality of IDs sorted according to the specified criterion, derive a first ID candidate group to be set between the first ID and the second ID based on the ID setting rule, and set at least some of the first ID candidate group to an ID of the non-recognized cell.

According to one embodiment disclosed herein, the first unit cell and the second unit cell may have a cell distance of 1 or less from the non-recognized cell.

According to one embodiment disclosed herein, the processor may be configured to derive a second ID candidate group that is not set to the IDs of the plurality of unit cells of the first ID candidate group, and set at least some of the second ID candidate group to the ID of the non-recognized cell.

According to one embodiment disclosed herein, the processor may be configured to set all IDs included in the second ID candidate group to the ID of the non-recognized cell.

A method of recovering a cell ID according to one embodiment disclosed herein includes an operation of acquiring a plurality of IDs corresponding to a plurality of unit cells, an operation of sorting the plurality of IDs according to a specified criterion, an operation of deriving an ID setting rule of the plurality of IDs based on the plurality of IDs sorted according to the specified criterion, an operation of detecting a non-recognized cell having an ID out of the ID setting rule among the plurality of unit cells based on the plurality of IDs, and an operation of setting an ID of the non-recognized cell based on an ID of at least one unit cell adjacent to the non-recognized cell and the ID setting rule.

According to one embodiment disclosed herein, the operation of detecting the non-recognized cell may include an operation of detecting the non-recognized cell having an ID out of the ID setting rule among the plurality of unit cells based on the plurality of IDs sorted according to the specified criterion.

The method according to one embodiment disclosed herein may include an operation of identifying a first ID of a first unit cell and a second ID of a second unit cell adjacent to the non-recognized cell based on the plurality of IDs sorted according to the specified criterion, an operation of deriving a first ID candidate group to be set between the first ID and the second ID based on the ID setting rule, and an operation of setting at least some of the first ID candidate group to the ID of the non-recognized cell.

The method according to one embodiment disclosed herein may include an operation of deriving a second ID candidate group that is not set to the IDs of the plurality of unit cells of the first ID candidate group, and an operation of setting at least some of the second ID candidate group to the ID of the non-recognized cell.

The method according to one embodiment disclosed herein may include an operation of setting all IDs included in the second ID candidate group to the ID of the non-recognized cell.

### [ADVANTAGEOUS EFFECTS]

According to the embodiments disclosed herein, it is possible to increase the tracking rate of the unit cell by recovering the ID of the non-recognized cell of which the ID is not recognized.

According to the embodiments disclosed herein, it is possible to increase the recovery rate of the non-recognized cell through the range recovery method of recovering all IDs included in the ID candidate group to the ID of the non-recognized cell.

In addition, various effects that may be directly or indirectly identified through this document can be provided.

### [DESCRIPTION OF DRAWINGS]

FIG. 1 is a block diagram illustrating a cell ID recovery device according to one embodiment.
FIG. 2 is an operation flowchart of the cell ID recovery device according to one embodiment.
FIG. 3A is a view illustrating an example in which the cell ID recovery device according to one embodiment sorts a plurality of acquired IDs and detects a non-recognized cell.
FIG. 3B is a view illustrating an example in which the cell ID recovery device according to one embodiment sets an ID of the non-recognized cell.
FIG. 4A is a view illustrating an example in which the cell ID recovery device according to one embodiment sorts a plurality of acquired IDs and detects a non-recognized cell.
FIG. 4B is a view illustrating an example in which the cell ID recovery device according to one embodiment sets the ID of the non-recognized cell.

### [MODE FOR INVENTION]

Hereinafter, various embodiments of the present invention will be described with reference to the accompanying drawings. However, it should be understood that this is not intended to limit the present invention to specific embodiments and includes various modifications, equivalents, and/or alternatives of the embodiments of the present invention.

It should be understood that various embodiments of this document and the terms used therein are not intended to limit the technical features described herein to specific embodiments and include various modifications, equivalents, or substitutes of the corresponding embodiments. In the description of the drawings, like reference numerals may be used for like or related components. The singular form of a noun corresponding to an item may include one item or a plurality of items unless the relevant context clearly dictates otherwise.

In this document, each of phrases such as "A or B," "at least one of A and B," "at least one of A or B," "A, B, or C," "at least one of A, B, and C," and "at least one of A, B, or C" may include any one of the items listed together in the corresponding phrase among these phrases or all possible combinations thereof. The terms such as "first," "second," "first," "second," "A," "B," "(a)," or "(b)" may simply be used to distinguish the corresponding component from another and do not limit the corresponding components in another aspect (e.g., importance or order) unless specially stated to the contrary.

In this document, when a certain (e.g., a first) component is described as being "connected," "coupled," or "joined" or described as being "coupled" or "connected" to another (e.g., a second) component with or without the terms "functionally" or "communicatively," this means that the certain component may be connected to another component directly (e.g., by wire), wirelessly, or through a third component.

According to one embodiment, a method according to various embodiments disclosed herein may be provided to be included in a computer program product. The computer program product may be traded between sellers and buyers as commodities. The computer program product may be distributed in the form of a device-readable storage medium (e.g., a compact disc read only memory (CD-ROM)) or distributed (e.g., downloaded or uploaded) through an application store or directly online between two user devices. In the case of the online distribution, at least some of the computer program products may be at least temporarily stored or temporarily generated in a device-readable storage medium such as a memory of a server of a manufacturer, a server of an application store, or a relay server.

According to various embodiments, each component (e.g., a module or a program) of the above-described components may include a single object or a plurality of objects, and some of the plurality of objects may be separately disposed in another component. According to various embodiments, one or more components or operations among the above-described corresponding components may be omitted, or one or more other components or operations may be added. Alternatively or additionally, the plurality of components (e.g., modules or programs) may be integrated into one component. In this case, the integrated component may perform one or more functions of each of the plurality of components identically or similarly to those performed by the corresponding component of the plurality of components before the integration. According to various embodiments, operations performed by modules, programs, or other components may be executed sequentially, in parallel, repeatedly, or heuristically, or one or more of the operations may be executed in a different order or omitted, or one or more other operations may be added.

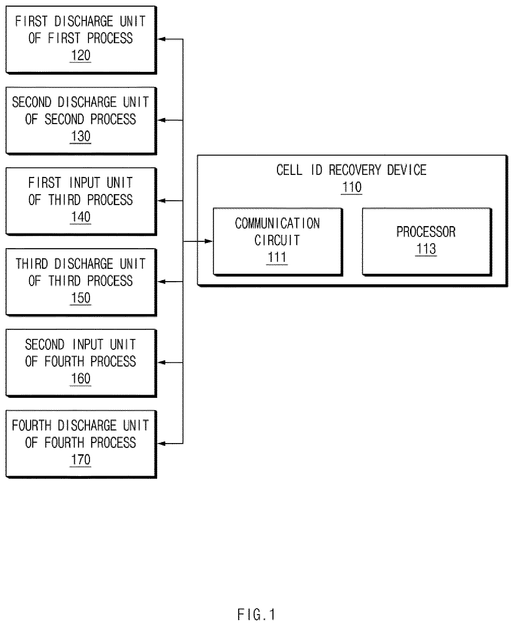

FIG. 1 is a block diagram illustrating a cell ID recovery device according to one embodiment.

Referring to FIG. 1, a cell ID recovery device 110 may include a communication circuit 111 and/or a processor 115. According to a certain embodiment, at least one of the components of FIG. 1 may be omitted from the cell ID recovery device 110, or one or more other components may be added thereto. According to the certain embodiment, some of these components may be implemented as a single integrated circuit.

The communication circuit 111 may transmit and receive data to and from a first discharge unit 120 of a first process, a second discharge unit 130 of a second process, a first input unit 140 of a third process, a third discharge unit 150 of the third process, a second input unit 160 of a fourth process, and/or a fourth discharge unit 170 of the fourth process by wire or wirelessly.

According to one embodiment, the first process, the second process, the third process, and the fourth process may be included in a process of manufacturing an electrode assembly constituting a secondary battery. For example, the first process may be a notching process of forming an electrode tab on an electrode sheet of each of a plurality of unit cells. The second process may be a lamination process of bonding the plurality of unit cells and a separator. The third process and the fourth process may be processes of forming an electrode assembly by inputting the plurality of unit cells in a unit of a specified number. The third process may include a stacking process. The stacking process may be a process of forming the electrode assembly by stacking the plurality of unit cells with the separator interposed therebetween. The fourth process may include a folding process. The folding process may be a process of forming the electrode assembly by arranging the plurality of unit cells on a long sheet-shaped separator and then repeatedly folding the separator from one end in the same direction.

According to one embodiment, the first discharge unit 120 of the first process, the second discharge unit 130 of the second process, the first input unit 140 of the third process, the third discharge unit 150 of the third process, the second input unit 160 of the fourth process, and/or the fourth discharge unit 170 of the fourth process may recognize a plurality of IDs of each of the plurality of unit cells. For example, the first discharge unit 120 of the first process, the second discharge unit 130 of the second process, the first input unit 140 of the third process, the third discharge unit 150 of the third process, the second input unit 160 of the fourth process, and/or the fourth discharge unit 170 of the fourth process may recognize the ID by recognizing a barcode marked on an electrode tab of each of the plurality of unit cells through the BCR.

According to one embodiment, the first discharge unit 120 of the first process (or the second discharge unit 130 of the second process) may recognize the IDs of the plurality of unit cells discharged through the first process (or the second process) and transmit the recognized IDs to the communication circuit 111 of the cell ID recovery device 110.

According to one embodiment, the first input unit 140 of the third process (or the third discharge unit 150 of the third process) may recognize the IDs of the plurality of unit cells discharged through the third process (to be input into the third process) and transmit the recognized IDs to the communication circuit 111 of the cell ID recovery device 110.

According to one embodiment, the second input unit 160 of the fourth process may recognize the IDs and an input order of the plurality of unit cells for each unit to be input into the fourth process before the plurality of unit cells are input into the fourth process. For example, when the fourth process is a process of folding 15 unit cells, the second input unit 160 of the fourth process may recognize IDs and an input order (e.g., NOS. 1 to 15) of the 15 unit cells to be input for primary folding. In addition, the second input unit 160 of the fourth process may recognize the IDs and the input order of the 15 unit cells to be input for secondary folding after the primary folding. The second input unit 160 of the fourth process may transmit information on the recognized IDs and input order of each of the plurality of unit cells to the communication circuit 111 of the cell ID recovery device 110.

According to one embodiment, the fourth discharge unit 170 of the fourth process may recognize the IDs and an arrangement order in the electrode assembly of the plurality of unit cells included in the electrode assembly discharged through the fourth process. For example, when the fourth process is a process of folding the 15 unit cells, the fourth discharge unit 170 of the fourth process may recognize IDs and an arrangement order (e.g., NOS. 1 to 15) of 15 unit cells included in a first electrode assembly formed through the primary folding. In addition, the fourth discharge unit 170 of the fourth process may recognize IDs and an arrangement order of 15 unit cells included in a second electrode assembly formed through secondary folding after the primary folding. The fourth discharge unit 170 of the fourth process may transmit information on the recognized IDs and arrangement order in the electrode assembly of each of the plurality of unit cells to the communication circuit 111 of the cell ID recovery device 110.

According to one embodiment, the communication circuit 111 may transmit the information on the plurality of IDs and/or the process input order (or the arrangement order in the electrode assembly) of each of the plurality of unit cells received from the first discharge unit 120 of the first process, the second discharge unit 130 of the second process, the first input unit 140 of the third process, the third discharge unit 150 of the third process, the second input unit 160 of the fourth process, and/or the fourth discharge unit 170 of the fourth process.

The processor 113 may control one or more other components connected to the processor 113 by executing software and perform various data processing or calculations. According to one embodiment, the processor 113 may control the overall operation of the cell ID recovery device 110 by controlling one or more other components connected to the processor 113. The processor 113 may include at least one among processing devices such as an application specific integrated circuit (ASIC), a digital signal processor (DSP), a programmable logic device (PLD), a field programmable gate array (FPGA), a central processing unit (CPU), a microcontroller, or a microprocessor.

According to one embodiment, the processor 113 may acquire the plurality of IDs of each of the plurality of unit cells through the communication circuit 111. According to one embodiment, the processor 113 may acquire the plurality of IDs of each of the plurality of unit cells from the first discharge unit 120 of the first process, the second discharge unit 130 of the second process, and/or the input unit 140 of the third process. According to one embodiment, the processor 113 may acquire the information on the plurality of IDs and/or the process input order of each of the plurality of unit cells from the input unit 140 of the third process.

According to one embodiment, the processor 113 may sort the plurality of IDs based on a time sequence in which the plurality of IDs are acquired. According to one embodiment, when the processor 113 acquires the plurality of IDs from the first discharge unit 120 of the first process or the second discharge unit 130 of the second process, the processor 113 may sort the plurality of IDs based on the time sequence in which the plurality of IDs are acquired. For example, the processor 113 may sort the plurality of IDs in a descending order (or in an ascending order) according to the acquired time sequence.

According to one embodiment, the processor 113 may sort the plurality of IDs based on the order in which the plurality of unit cells are input into the process and the time sequence in which the plurality of IDs are acquired. According to one embodiment, when the processor 113 acquires the plurality of IDs from the input unit 140 of the third process, the processor 113 may sort the plurality of IDs based on the order in which the plurality of unit cells are input into the process and the time sequence in which the plurality of IDs are acquired. For example, when the third process is a process of stacking or folding two unit cells, the processor 113 may first classify IDs of unit cells having the same order (e.g., NO. 1 or 2) to be input into the third process. More specifically, when the third process performs stacking or folding three times, IDs of three unit cells of which an input order is NO. 1 and IDs of three unit cells of which the input order is NO. 2 in each stacking or folding process may be classified.

The processor 113 may sort the classified IDs based on the acquired time sequence. For example, the processor 113 may sort the classified IDs in a descending order (or in an ascending order) according to the acquired time sequence. More specifically, when the third process performs the stacking or folding process three times, the processor 113 may sort the IDs of the three unit cells of which the input order is NO. 1 (or NO. 2) in each stacking or folding in the descending order (or in the ascending order).

According to one embodiment, the processor 113 may derive an ID setting rule of the plurality of IDs. According to one embodiment, the processor 113 may derive the ID setting rule of the plurality of IDs based on the plurality of IDs sorted according to a specified criterion. According to one embodiment, the processor 113 may derive the ID setting rule based on numbers or alphabetic characters positioned at the last digits of the plurality of sorted IDs. For example, the processor 113 may derive a rule in which the numbers positioned at the last digits of the plurality of sorted IDs are set to numbers that increase by N (in which N is a natural number) in a sorted order. As another example, the processor 113 may derive a rule in which alphabets positioned at the last digits of the plurality of sorted IDs are set to alphabets before the Nth in the sorted order.

According to one embodiment, the processor 113 may detect a non-recognized cell among the plurality of unit cells.

According to one embodiment, the processor 113 may detect the non-recognized cell among the plurality of unit cells based on the plurality of acquired IDs. According to one embodiment, the processor 113 may detect the non-recognized cell having an ID including a specified number or an alphabetic character among the plurality of unit cells. For example, the specified alphabetic character may be a lowercase letter o. In this case, the processor 113 may detect a unit cell having the ID including the lowercase letter o as the non-recognized cell.

According to one embodiment, the processor 113 may detect the non-recognized cell among the plurality of unit cells based on the plurality of IDs sorted according to the specified criterion. According to one embodiment, the processor 113 may detect a non-recognized cell having an ID out of the ID setting rule among the plurality of unit cells.

According to one embodiment, the processor 113 may set the ID of the non-recognized cell. According to one embodiment, the processor 113 may set the ID of the non-recognized cell based on an ID of at least one unit cell adjacent to the non-recognized cell and the ID setting rule derived in operation 215.

According to one embodiment, the processor 113 may identify a first ID of a first unit cell and a second ID of a second unit cell adjacent to the non-recognized cell based on the plurality of IDs sorted according to the specified criterion. For example, the first unit cell and the second unit cell may have a cell distance of 1 or less from the non-recognized cell on a table in which the IDs are sorted.

According to one embodiment, the processor 113 may derive a first ID candidate group that may be set between the first ID and the second ID based on the ID setting rule. For example, the ID setting rule is a rule in which NBG80050 is set before the last digit of an ID and a number in the last digit is set to a number that increases by 3, the first ID may be NBG800501, and the second ID may be NBG800507. In one embodiment, the processor 113 may derive the first ID candidate group (e.g., NBG800502 to NBG800506) in which the ID has NBG80050 set before the last digit and the number in the last digit set to a number between 1 and 7 based on the ID setting rule. In another embodiment, the processor 113 may derive the first ID candidate group (e.g., NBG800504) in which the ID has NBG80050 set before the last digit and the number in the last digit set to 4, which increases from 1 by 3 and decreases from 7 by 3, based on the ID setting rule. According to one embodiment, the processor 113 may set at least some of the first ID candidate group to IDs of non-recognized cells.

According to one embodiment, the processor 113 may derive a second ID candidate group that is not set to the IDs of the plurality of unit cells of the first ID candidate group. For example, when NBG800502 and NBG800506 of the first ID candidate group (e.g., NBG800502 to NBG800506) are set to IDs of other unit cells, the processor 113 may derive the remaining IDs (e.g., NBG800503, NBG800504, and NBG800505) excluding NBG800502 and NBG800506 as the second ID candidate group. According to one embodiment, the processor 113 may set at least some of the second ID candidate group to IDs of non-recognized cells.

According to one embodiment, the processor 113 may set all IDs included in the second ID candidate group to the IDs of the non-recognized cells. For example, the processor 113 may set all of NBG800503, NBG800504, and NBG800505 included in the second ID candidate group to the IDs of the non-recognized cells. Hereinafter, a method of setting the plurality of IDs included in the ID candidate group to the ID of one non-recognized cell may be referred to as a range recovery method. The cell ID recovery device 110 can increase a cell ID recovery rate through the range recovery method.

According to one embodiment, the plurality of IDs of each of the plurality of unit cells may be interlocked with an ID of a finally manufactured secondary battery (e.g., a battery cell). According to one embodiment, the secondary battery may be manufactured by forming an electrode assembly by stacking or folding the specified number of unit cells, having the electrode assembly embedded in a cylindrical or prismatic case made of a metal material or a pouch-shaped case of a laminate sheet containing aluminum, and sealing the case after injecting an electrolyte solution. In this case, IDs of the specified number of unit cells embedded in the secondary battery may be interlocked with the ID of the secondary battery. Here, the ID of the secondary battery may be an ID marked on the case of the secondary battery. Therefore, when a problem occurs in the secondary battery, the IDs of the specified number of unit cells interlocked with the ID of the secondary battery may be tracked.

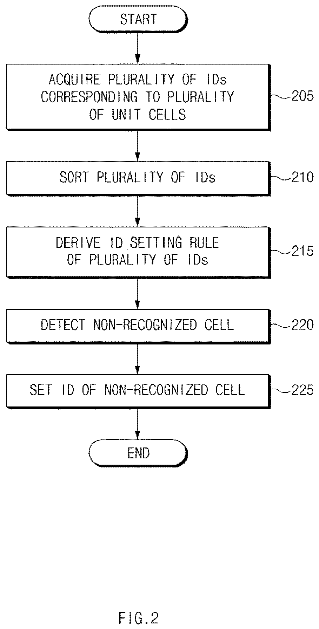

FIG. 2 is an operation flowchart of the cell ID recovery device according to one embodiment. FIG. 2 may be described using components in FIG. 1.

The embodiment illustrated in FIG. 2 is only one embodiment, the order of operations according to various embodiments of the present invention may be different from that illustrated in FIG. 2, and some operations illustrated in FIG. 2 may be omitted, the order between the operations may be changed, or the operations may be merged.

According to one embodiment, it can be understood that operations 205 to 225 are performed by the processor 113 of the cell ID recovery device 110.

Referring to FIG. 2, in operation 205, the cell ID recovery device 110 may acquire a plurality of IDs, each of which corresponds to one of the plurality of unit cells. According to one embodiment, the cell ID recovery device 110 may acquire the plurality of IDs for the plurality of unit cells from the first discharge unit 120 of the first process, the second discharge unit 130 of the second process, the first input unit 140 of the third process, the third discharge unit 150 of the third process, the second input unit 160 of the fourth process, and/or the fourth discharge unit 170 of the fourth process. According to one embodiment, the cell ID recovery device 110 may acquire the information on the plurality of IDs and/or the process input order of each of the plurality of unit cells from the second input unit 160 of the fourth process. According to one embodiment, the cell ID recovery device 110 may acquire the information on the plurality of IDs and the arrangement order in the electrode assembly of each of the plurality of unit cells from the fourth discharge unit 170 of the fourth process.

Here, the first process may be a notching process of forming an electrode tab on an electrode sheet of each of a plurality of unit cells. The second process may be a lamination process of bonding the plurality of unit cells and a separator. The third process may be a process of forming an electrode assembly by inputting the plurality of unit cells in a unit of a specified number. The third process may include a stacking process. The stacking process may be a process of forming the electrode assembly by stacking the plurality of unit cells with the separator interposed therebetween. The fourth process may include a folding process. The folding process may be a process of forming the electrode assembly by arranging the plurality of unit cells on a long sheet-shaped separator and then repeatedly folding the separator from one end in the same direction.

In operation 210, the cell ID recovery device 110 may sort the plurality of IDs acquired in operation 205 according to the specified criterion.

According to one embodiment, the cell ID recovery device 110 may sort the plurality of IDs based on the time sequence in which the plurality of IDs are acquired. According to one embodiment, when the cell ID recovery device 110 acquires the plurality of IDs from the first discharge unit 120 of the first process, the second discharge unit 130 of the second process, the first input unit 140 of the third process, or the third discharge unit 150 of the third process in operation 205, the cell ID recovery device 110 may sort the plurality of IDs based on the time sequence in which the plurality of IDs are acquired. For example, the cell ID recovery device 110 may sort the plurality of IDs in the descending order (or in the ascending order) according to the acquired time sequence.

According to one embodiment, the cell ID recovery device 110 may sort the plurality of IDs based on the order in which the plurality of unit cells are input into the process and the time sequence in which the plurality of IDs are acquired. According to one embodiment, when the cell ID recovery device 110 acquires the plurality of IDs from the second input unit 160 of the fourth process in operation 205, the cell ID recovery device 110 may sort the plurality of IDs based on the order in which the plurality of unit cells are input into the process and the time sequence in which the plurality of IDs are acquired. For example, when the fourth process is a process of folding two unit cells, the cell ID recovery device 110 may first classify IDs of unit cells having the same order (e.g., NO. 1 or 2) to be input into the fourth process. More specifically, when the fourth process performs folding three times, IDs of three unit cells of which an input order is NO. 1 and IDs of three unit cells of which the input order is NO. 2 in each folding process may be classified.

The cell ID recovery device 110 may sort the classified IDs based on the acquired time sequence. For example, the cell ID recovery device 110 may sort the classified IDs in the descending order (or in the ascending order) according to the acquired time sequence. More specifically, when the fourth process performs the folding process three times, the cell ID recovery device 110 may sort the IDs of the three unit cells of which the input order is NO. 1 (or NO. 2) in each folding in the descending order (or in the ascending order) according to the time sequence.

According to one embodiment, the cell ID recovery device 110 may sort the plurality of IDs based on the arrangement order in the electrode assembly of the plurality of unit cells and the time sequence in which the plurality of IDs are acquired. According to one embodiment, when the cell ID recovery device 110 acquires the plurality of IDs from the fourth input unit 170 of the fourth process in operation 205, the cell ID recovery device 110 may sort the plurality of IDs based on the arrangement order in the electrode assembly of the plurality of unit cells and the time sequence in which the plurality of IDs are acquired. For example, when the fourth process is a process of folding two unit cells, the cell ID recovery device 110 may first classify IDs of unit cells having the same arrangement order (e.g., NO. 1 or 2) in the electrode assembly formed through the fourth process. More specifically, when the fourth process performs folding three times, IDs of three unit cells of which the arrangement order in the electrode assembly formed through each folding process is NO. 1 and IDs of three unit cells of which the arrangement order is NO. 2 may be classified.

The cell ID recovery device 110 may sort the classified IDs based on the acquired time sequence. For example, the cell ID recovery device 110 may sort the classified IDs in the descending order (or in the ascending order) according to the acquired time sequence. More specifically, when the fourth process performs the folding process three times, the cell ID recovery device 110 may sort the IDs of the three unit cells of which the arrangement order in the electrode assembly formed through each folding process is NO. 1 (or NO. 2) in the descending order (or in the ascending order) according to the time sequence.

In operation 215, the cell ID recovery device 110 may derive the ID setting rule of the plurality of IDs. According to one embodiment, the cell ID recovery device 110 may derive the ID setting rule of the plurality of IDs based on the plurality of IDs sorted in operation 210. According to one embodiment, the cell ID recovery device 110 may derive the ID setting rule based on numbers or alphabetic characters positioned at the last digits of the plurality of sorted IDs. For example, the cell ID recovery device 110 may derive a rule in which the numbers positioned at the last digits of the plurality of sorted IDs are set to numbers that increase by N (in which N is a natural number) in the sorted order. As another example, the cell ID recovery device 110 may derive a rule in which the alphabets positioned at the last digits of the plurality of sorted IDs are set to alphabets before the Nth in the sorted order.

In operation 220, the cell ID recovery device 110 may detect the non-recognized cell among the plurality of unit cells.

According to one embodiment, the cell ID recovery device 110 may detect the non-recognized cell among the plurality of unit cells based on the plurality of IDs acquired in operation 205. According to one embodiment, the cell ID recovery device 110 may detect the non-recognized cell having the ID including the specified number or alphabetic character among the plurality of unit cells. For example, the specified alphabetic character may be a lowercase letter o. In this case, the cell ID recovery device 110 may detect the unit cell having the ID including the lowercase letter o in the fifth digit as the non-recognized cell.

According to one embodiment, the cell ID recovery device 110 may detect the non-recognized cell among the plurality of unit cells based on the plurality of IDs sorted in operation 210. According to one embodiment, the cell ID recovery device 110 may detect the non-recognized cell having the ID out of the ID setting rule derived in operation 215 among the plurality of unit cells.

In operation 225, the cell ID recovery device 110 may set the ID of the non-recognized cell detected in operation 220. According to one embodiment, the cell ID recovery device 110 may set the ID of the non-recognized cell based on the ID of at least one unit cell adjacent to the non-recognized cell and the ID setting rule derived in operation 215.

According to one embodiment, the cell ID recovery device 110 may identify the first ID of the first unit cell and the second ID of the second unit cell adjacent to the non-recognized cell based on the plurality of IDs sorted in operation 210. For example, the first unit cell and the second unit cell may have the cell distance of 1 or less from the non-recognized cell on the table in which the IDs are sorted.

According to one embodiment, the cell ID recovery device 110 may derive the first ID candidate group that may be set between the first ID and the second ID based on the ID setting rule. For example, the ID setting rule may be a rule in which NBG80050i is set before the last digit of an ID and a number in the last digit is set to a number that increases by 3, the first ID may be NBG80050i1, and the second ID may be NBG80050i7. In one embodiment, the cell ID recovery device 110 may derive the first ID candidate group (e.g., NBG80050i2 to NBG80050i6) in which the ID has NBG80050i set before the last digit and the number in the last digit set to a number between 1 and 7 based on the ID setting rule. In another embodiment, the cell ID recovery device 110 may derive the first ID candidate group (e.g., NBG80050i4) in which the ID has NBG80050i set before the last digit and the number in the last digit set to 4 that increases from 1 by 3 and decreases from 7 by 3 based on the ID setting rule. According to one embodiment, the cell ID recovery device 110 may set at least some of the first ID candidate group to the IDs of the non-recognized cells.

According to one embodiment, the cell ID recovery device 110 may derive the second ID candidate group that is not set to the IDs of the plurality of unit cells of the first ID candidate group. For example, when NBG80050i2 and NBG80050i6 of the first ID candidate group (e.g., NBG80050i2 to NBG80050i6) are set to IDs of other unit cells, the cell ID recovery device 110 may derive the remaining IDs (e.g., NBG80050i3, NBG80050i4, and NBG80050i5) excluding NBG80050i2 and NBG80050i6 as the second ID candidate group. According to one embodiment, the cell ID recovery device 110 may set at least some of the second ID candidate group to the IDs of the non-recognized cells.

According to one embodiment, the cell ID recovery device 110 may set all IDs included in the second ID candidate group to the IDs of the non-recognized cells. For example, the cell ID recovery device 110 may set all of NBG80050i3, NBG80050i4, and NBG80050i5 included in the second ID candidate group to the IDs of the non-recognized cells. The cell ID recovery device 110 can increase a cell ID recovery rate through the range recovery method.

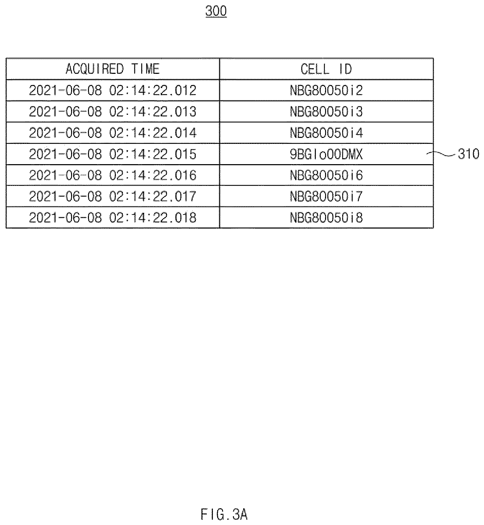

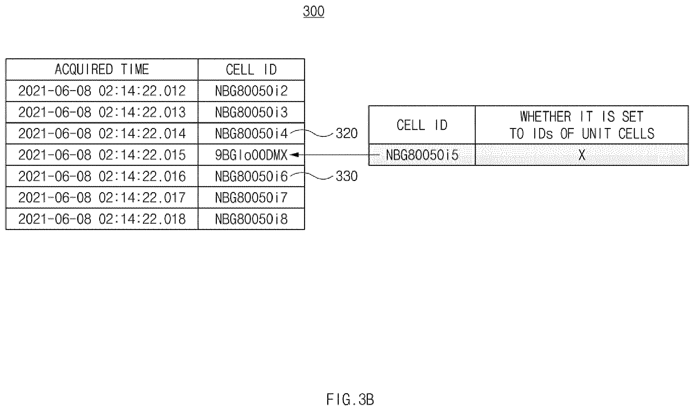

Hereinafter, an example in which the cell ID recovery device 110 according to one embodiment performs the operation of FIG. 2 after acquiring the plurality of IDs from the first discharge unit 120 of the first process, the second discharge unit 130 of the second process, the first input unit 140 of the third process, or the third discharge unit 150 of the third process will be described with reference to FIGS. 3A and 3B.

FIG. 3A is a view illustrating an example in which the cell ID recovery device according to one embodiment sorts a plurality of acquired IDs and detects a non-recognized cell. FIG. 3A may be described using components in FIG. 1.

Referring to FIG. 3A, the cell ID recovery device 110 may sort the plurality of acquired IDs in an ascending order according to the acquired time sequence as in a table 300.

According to one embodiment, the cell ID recovery device 110 may derive the ID setting rule based on the plurality of IDs sorted in the table 300. For example, the cell ID recovery device 110 may derive a rule in which NBG80050i is set before the last digit of the plurality of sorted IDs and a number in the last digit is set to a number that starts from 2 and increases by 1.

According to one embodiment, the cell ID recovery device 110 may detect a non-recognized cell among the plurality of unit cells. For example, the cell ID recovery device 110 may detect a unit cell having an ID 310 (e.g., 9BGIo00DMX) including a lowercase letter o in a fifth digit as the non-recognized cell. As another example, the cell ID recovery device 110 may detect a unit cell having the ID 310 in which NBG80050i is not before the last digit or the number in the last digit is not 5 that increases from 4 by 1 according to the ID setting rule.

FIG. 3B is a view illustrating an example in which the cell ID recovery device according to one embodiment sets an ID of the non-recognized cell. FIG. 3B may be described using components in FIG. 1.

Referring to FIG. 3B, the cell ID recovery device 110 may identify a first ID 320 (e.g., NBG80050i4) and a second ID 330 (e.g., NBG80050i6) adjacent to the ID 310 (e.g., 9BGIo00DMX) of the non-recognized cell on the table 300. Here, the first ID 320 and the second ID 330 may have a cell distance of 1 or less from the ID 310 of the non-recognized cell on the table 300. More specifically, on the table 300, the first ID 320 may be positioned one row above the ID 310 of the non-recognized cell, and the second ID 330 may be positioned one row under the ID 310 of the non-recognized cell.

According to one embodiment, the cell ID recovery device 110 may derive the first ID candidate group that may be set between the first ID 320 and the second ID 330 based on the ID setting rule. For example, the cell ID recovery device 110 may derive NBG80050i5 in which NBG80050i is set before the last digit and the number in the last digit is set to a number between 4 and 6 as the first ID candidate group.

According to one embodiment, the cell ID recovery device 110 may identify whether NBG80050i5 included in the first ID candidate group has been set to the IDs of the other unit cells. When NBG80050i5 is not set to the IDs of the other unit cells, the cell ID recovery device 110 may set NBG80050i5 to the ID of the non-recognized cell.

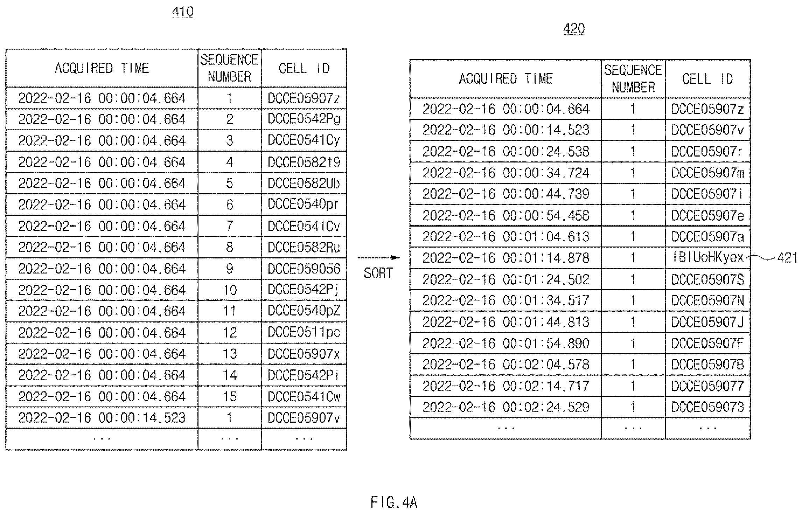

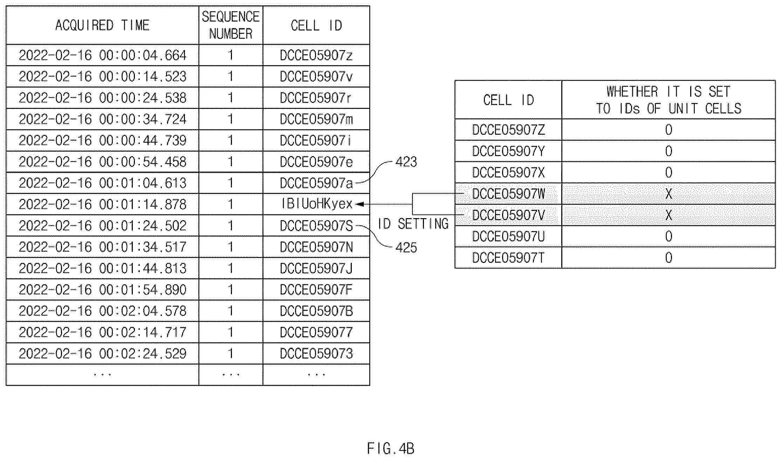

Hereinafter, an example in which the cell ID recovery device 110 according to one embodiment performs the operation of FIG. 2 after acquiring the plurality of IDs from the second input unit 160 of the fourth process or the fourth discharge unit 170 of the fourth process will be described with reference to FIGS. 4A and 4B.

FIG. 4A is a view illustrating an example in which the cell ID recovery device according to one embodiment sorts a plurality of acquired IDs and detects a non-recognized cell. FIG. 4A may be described using components in FIG. 1.

Referring to FIG. 4A, the cell ID recovery device 110 may acquire information on the plurality of IDs and/or the process input order (or the arrangement order in the electrode assembly) of each of the plurality of unit cells from the second input unit 160 of the fourth process as in a first table 410. For example, the fourth process may be a process of folding 15 unit cells.

According to one embodiment, the cell ID recovery device 110 may acquire information on IDs and an input order (e.g., NOS. 1 to 15) of the 15 unit cells to be input for primary folding. In addition, the cell ID recovery device 110 may acquire the information on the IDs and the input order of the unit cells to be input for a plurality of folding to be performed in the fourth process after the primary folding in a unit of 15. According to another embodiment, the cell ID recovery device 110 may acquire information on IDs and an arrangement order (e.g., NOS. 1 to 15) in a first electrode assembly of 15 unit cells included in the first electrode assembly formed through the primary folding. In addition, the cell ID recovery device 110 may acquire information on IDs and an arrangement order of the unit cells included in each of the plurality of electrode assemblies formed through the plurality of folding performed in the fourth process after the primary folding in a unit of 15.

According to one embodiment, the cell ID recovery device 110 may sort the plurality of IDs based on the order in which the plurality of unit cells are input into the process (or the arrangement order in the electrode assembly) and a time sequence in which the plurality of IDs are acquired as in a second table 420.

According to one embodiment, when the third process performs stacking or folding 15 times, the cell ID recovery device 110 may classify IDs of the 15 unit cells of which the input order (or the arrangement order in the electrode assembly) is NO. 1 and IDs of 15 unit cells of which the input order (or the arrangement order in the electrode assembly) is one of NOS. 2 to 15 in each folding process.

According to one embodiment, the cell ID recovery device 110 may sort the IDs of the 15 unit cells of which the input order (or the arrangement order in the electrode assembly) is NO. 1 (or NOS. 2 to 15) in each folding in the ascending order according to the time sequence.

According to one embodiment, the cell ID recovery device 110 may derive the ID setting rule based on the plurality of IDs sorted in the second table 420. For example, the cell ID recovery device 110 may derive a rule in which DCCE05907 is set before the last digits of the plurality of sorted IDs and numbers in the last digits start with a lowercase z and are set to alphabets or numbers before the fourth from the lowercase z as the last digits go down one row at a time.

According to one embodiment, the cell ID recovery device 110 may detect a non-recognized cell among the plurality of unit cells. For example, the cell ID recovery device 110 may detect a unit cell having an ID 421 (e.g., IBIUoHKyex) including a lowercase letter o in a fifth digit as the non-recognized cell. As another example, the cell ID recovery device 110 may detect a unit cell having the ID 421 in which DCCE05907 is not before the last digit or the number in the last digit is not an uppercase letter W, which is the fourth from a, as the non-recognized cell according to the ID setting rule.

FIG. 4B is a view illustrating an example in which the cell ID recovery device according to one embodiment sets the ID of the non-recognized cell. FIG. 4B may be described using components in FIG. 1.

Referring to FIG. 4B, the cell ID recovery device 110 may identify a first ID 423 (e.g., DCCE05907a) and a second ID 425 (e.g., DCCE05907S) adjacent to the ID 421 (e.g., IBIUoHKyex) of the non-recognized cell on the second table 420. Here, the first ID 423 and the second ID 425 may have a cell distance of 1 or less from the ID 421 of the non-recognized cell on the second table 420. More specifically, on the second table 420, the first ID 423 may be positioned one row above the ID 421 of the non-recognized cell, and the second ID 425 may be positioned one row under the ID 421 of the non-recognized cell.

According to one embodiment, the cell ID recovery device 110 may derive the first ID candidate group that may be set between the first ID 423 and the second ID 425 based on the ID setting rule. For example, the cell ID recovery device 110 may derive a second ID candidate group (e.g., DCCE05907Z, DCCE05907Y, DCCE05907X, DCCE05907W, DCCE05907V, DCCE05907U, and DCCE05907T) in which the ID has DCCE05907 set before the last digit and the last digit set to an alphabetic character between a lowercase a and an uppercase letter S.

According to one embodiment, the cell ID recovery device 110 may derive the second ID candidate group (e.g., DCCE05907W and DCCE05907V) that are not set to the IDs of the other unit cells of the first ID candidate group. According to one embodiment, the cell ID recovery device 110 may set at least some of the second ID candidate group to the IDs of the non-recognized cells.

According to one embodiment, the cell ID recovery device 110 may set DCCE05907W and DCCE05907V included in the second ID candidate group to the IDs of the non-recognized cells. The cell ID recovery device 110 can increase a cell ID recovery rate through the range recovery method.

The terms such as "comprise," "constitute," or "have" described above mean that the corresponding component may be inherent unless otherwise stated, and thus should be construed as further including another component rather than excluding another component. All terms including technical or scientific terms have the same meaning as commonly understood by those skilled in the art to which the embodiments disclosed herein pertain unless defined otherwise. Commonly used terms, such as terms defined in a dictionary, should be construed as consistent with the contextual meaning of the related art and are not construed in an ideal or excessively formal meaning unless explicitly defined herein.

## Claims

1. A cell identification (ID) recovery device comprising:
a communication circuit; and
a processor,
wherein the processor is configured to:
acquire a plurality of IDs corresponding to a plurality of unit cells through the communication circuit;
sort the plurality of IDs according to a specified criterion;
derive an ID setting rule of the plurality of IDs based on the plurality of IDs sorted according to the specified criterion;
detect a non-recognized cell among the plurality of unit cells based on the plurality of IDs; and
set an ID of the non-recognized cell based on an ID of at least one unit cell adjacent to the non-recognized cell and the ID setting rule.

2. The cell ID recovery device of claim 1, wherein the processor is configured to:
acquire the plurality of IDs corresponding to the plurality of unit cells from a first discharge unit of a first process, a second discharge unit of a second process, a first input unit of a third process, and/or a third discharge unit of a third process through the communication circuit, in which the first process is a notching process of forming an electrode tab on an electrode sheet of each of the plurality of unit cells, the second process is a lamination process of bonding the plurality of unit cells and a separator, the third process is a process of forming an electrode assembly by inputting the plurality of unit cells in a unit of a specified number, and the third process includes a stacking process; and
sort the plurality of IDs based on a time sequence in which the plurality of IDs are acquired.

3. The cell ID recovery device of claim 1, wherein the processor is configured to:
acquire the plurality of IDs corresponding to the plurality of unit cells from a second input unit of a fourth process through the communication circuit, in which the fourth process is a process of forming an electrode assembly by inputting the plurality of unit cells in a unit of a specified number, and the fourth process includes a folding process; and
sort the plurality of IDs based on an order in which the plurality of unit cells are input into the fourth process and a time sequence in which the plurality of IDs are acquired.

4. The cell ID recovery device of claim 1, wherein the processor is configured to:
acquire the plurality of IDs corresponding to the plurality of unit cells from a fourth discharge unit of a fourth process through the communication circuit, in which the fourth process is a process of forming an electrode assembly by inputting the plurality of unit cells in a unit of a specified number, and the fourth process includes a folding process; and
sort the plurality of IDs based on an arrangement order in the electrode assembly formed through the fourth process of the plurality of IDs and a time sequence in which the plurality of IDs are acquired.

5. The cell ID recovery device of claim 1, wherein the processor is configured to detect the non-recognized cell having an ID including a specified number or alphabetic character among the plurality of unit cells based on the plurality of IDs.

6. The cell ID recovery device of claim 1, wherein the processor is configured to detect the non-recognized cell having an ID out of the ID setting rule among the plurality of unit cells based on the plurality of IDs sorted according to the specified criterion.

7. The cell ID recovery device of claim 1, wherein the processor is configured to:
identify a first ID of a first unit cell and a second ID of a second unit cell adjacent to the non-recognized cell based on the plurality of IDs sorted according to the specified criterion;
derive a first ID candidate group to be set between the first ID and the second ID based on the ID setting rule; and
set at least some of the first ID candidate group to an ID of the non-recognized cell.

8. The cell ID recovery device of claim 7, wherein the first unit cell and the second unit cell have a cell distance of 1 or less from the non-recognized cell.

9. The cell ID recovery device of claim 7, wherein the processor is configured to:
derive a second ID candidate group that is not set to the IDs of the plurality of unit cells of the first ID candidate group; and
set at least some of the second ID candidate group to the ID of the non-recognized cell.

10. The cell ID recovery device of claim 9, wherein the processor is configured to set all IDs included in the second ID candidate group to the ID of the non-recognized cell.

11. A method of operating a cell identification (ID) recovery device, comprising:
an operation of acquiring a plurality of IDs of each of a plurality of unit cells;
an operation of sorting the plurality of IDs according to a specified criterion;
an operation of deriving an ID setting rule of the plurality of IDs based on the plurality of IDs sorted according to the specified criterion;
an operation of detecting a non-recognized cell having an ID out of the ID setting rule among the plurality of unit cells based on the plurality of IDs; and
an operation of setting an ID of the non-recognized cell based on an ID of at least one unit cell adjacent to the non-recognized cell and the ID setting rule.

12. The method of claim 11, wherein the operation of detecting the non-recognized cell includes an operation of detecting the non-recognized cell having an ID out of the ID setting rule among the plurality of unit cells based on the plurality of IDs sorted according to the specified criterion.

13. The method of claim 11, comprising: an operation of identifying a first ID of a first unit cell and a second ID of a second unit cell adjacent to the non-recognized cell based on the plurality of IDs sorted according to the specified criterion;
an operation of deriving a first ID candidate group to be set between the first ID and the second ID based on the ID setting rule; and
an operation of setting at least some of the first ID candidate group to the ID of the non-recognized cell.

14. The method of claim 13, comprising: an operation of deriving a second ID candidate group that is not set to the IDs of the plurality of unit cells of the first ID candidate group; and
an operation of setting at least some of the second ID candidate group to the ID of the non-recognized cell.

15. The method of claim 14, comprising: an operation of setting all IDs included in the second ID candidate group to the ID of the non-recognized cell.
